# EUROPEAN PATENT SPECIFICATION

(11) **EP 3 223 255 B1**
(45) Date of publication and mention of the grant of the patent: **25.12.2019**
(21) Application number: 15860999.0
(22) Date of filing: 10.04.2015
(51) Int. Cl.: G08C 23/04, H04M 1/725

(54) **MULTIFUNCTIONAL INFRARED SIGNAL PROCESSING METHOD, MOBILE TERMINAL, AND STORAGE MEDIUM**
MULTIFUNKTIONELLES INFRAROTSIGNALVERARBEITUNGSVERFAHREN, MOBILES ENDGERÄT UND SPEICHERMEDIUM
PROCÉDÉ DE TRAITEMENT DE SIGNAL INFRAROUGE MULTIFONCTIONNEL, TERMINAL MOBILE ET SUPPORT D'INFORMATIONS

(30) Priority: 19.11.2014 CN 201410665620
(43) Date of publication of application: 27.09.2017
(73) Proprietor: Sanechips Technology Co., Ltd., Shenzhen, Guangdong 518055 (CN)
(72) Inventor: GAO, Feng, Shenzhen, Guangdong 518085 (CN)
(74) Representative: D'Halleweyn, Nele Veerle Trees Gertrudis
(86) International application number: PCT/CN2015/076333
(87) International publication number: WO 2016/078299

(56) References cited:
- EP-A1- 2 579 627
- WO-A1-2011/022971
- WO-A1-2012/075619
- CN-A- 101 136 138
- CN-A- 101 729 654
- CN-A- 102 523 635
- CN-U- 201 717 939
- US-A1- 2004 249 925
- US-A1- 2014 267 032
- KERANEN K ET AL: "Infrared temperature sensor system for mobile devices", SENSORS AND ACTUATORS A: PHYSICAL, ELSEVIER BV, NL, vol. 158, no. 1, 1 March 2010 (2010-03-01) , pages 161-167, XP026905762, ISSN: 0924-4247, DOI: 10.1016/J.SNA.2009.12.023 [retrieved on 2010-01-04]

## Description

### TECHNICAL FIELD

The disclosure relates to relevant technologies for signal processing in the field of communications, and in particular, to a multifunctional infrared signal processing method, a mobile terminal and a storage medium.

### BACKGROUND

In daily life, a person may usually encounter the following embarrassing circumstances: 1. when a measurement device is not carried or a situation does not facilitate customary measurement, the person can only visually measure a distance from an object; 2. when a moving object passes by, the person desires to know an accurate moving speed of the moving object; 3. someone around has a fever and the body temperature needs to be measured, but a thermometer cannot be found in time; and 4. under the conditions that remote controllers of remotely-controllable household appliances such as an air conditioner and a TV cannot be found, a person desires to adjust the household appliances immediately.

Persons often solve these embarrassing circumstances in an estimation manner or other time and labor consuming manners. A mobile phone is a necessity carried on the person. If the above-mentioned problems can be solved through the mobile phone, a user may get rid of the above-mentioned embarrassing circumstances when measurement and device control are needed, thus bringing a great convenience to the user.
D1 (US 2014/0267032) discloses systems, methods, and media for providing an enhanced remote control having multiple modes.
D2 (WO 2011/022971) discloses mobile terminal with ranging function.
D3 (Infrared temperature sensor system for mobile devices, XP026905762) discloses infrared temperature sensor system for mobile devices.

### SUMMARY

In view of this, the embodiments of the disclosure are intended to provide a multifunctional infrared signal processing method, a mobile terminal and a storage medium, capable of solving the problem of inconvenience for a user when measurement and device control are needed currently. The invention is defined by the subject-matter of the independent claims. Advantageous embodiments are subject to the dependent claims.

To this end, the technical solutions of examples of the disclosure are implemented as follows.

An example of the disclosure provides a multifunctional infrared signal processing method, which may include:
when it is determined by a mobile terminal that a current operation mode is a first operation mode, processing, by a mobile terminal, preset first data to form a first infrared signal, transmitting the first infrared signal, and recording transmitting time; when it is determined that a received second infrared signal is a reflective signal of the first infrared signal, recording receiving time; acquiring first measurement data according to the transmitting time and the receiving time;
or, when it is determined by the mobile terminal that the current operation mode is a second operation mode and an attribute of an object to be measured is a first attribute, focusing target infrared radiation energy to form a third infrared signal; processing the third infrared signal, and acquiring second measurement data according to the first attribute and the processed data;
or, when it is determined that the current operation mode is a third operation mode and the type of a device to be controlled is a first type, detecting an input control signal, and acquiring first control data according to the first type and the control signal; and processing the first control data to form a fourth infrared signal, and transmitting the fourth infrared signal for controlling the device to be controlled.

In the above-mentioned solution, the first operation mode may be a distance measurement mode, and the step of acquiring first measurement data according to the transmitting time and the receiving time may include:
calculating a time difference Δt between the transmitting time and the receiving time, and obtaining first measurement data s according to the time difference Δt and an infrared signal transmission speed v, where s=Δt*v/2.

In the above-mentioned solution, the first operation mode may be a distance measurement mode, and after acquiring the first measurement data according to the transmitting time and the receiving time, the method may further include:
retransmitting the first infrared signal for n times, recording time differences Δt₁, Δt₂, ..., Δtₙ between receptions of two successive reflective signals of the reflective signals of the first infrared signals, and obtaining third measurement data vₙ according to the time differences and the infrared signal transmission speed v, where vₙ=(Δt₁+Δt₂+...+Δtₙ)*v/2n, and n is a positive integer.

In the above-mentioned solution, the second operation mode may be a temperature measurement mode, and the step of acquiring second measurement data according to the first attribute and the processed data may include:
acquiring, according to the first attribute, an emissivity corresponding to the object to be measured, and correcting the processed data according to the emissivity to acquire second measurement data.

In the above-mentioned solution, the third operation mode may be a remote control mode, and the step of acquiring first control data according to the first type and the control signal may include:
acquiring a code table corresponding to the first type according to the first type, and acquiring from the code table, first control data corresponding to the control signal according to the control signal.

An example of the disclosure also provides a mobile terminal. The mobile terminal include: a processing module, a transmitting module and a receiving module.

The processing module is configured to: send, when it is determined that a current operation mode is a first operation mode, preset first data to the transmitting module, and acquire first measurement data according to transmitting time sent by the transmitting module and receiving time sent by the receiving module.

Or, the processing module is configured to trigger, when it is determined that the current operation mode is a second operation mode, the receiving module, and acquire, when it is determined that an attribute of an object to be measured is a first attribute, second measurement data according to the first attribute and the processed data sent by the receiving module.

Or, the processing module is configured to detect, when it is determined that the current operation mode is a third operation mode and the type of a device to be controlled is a first type, an input control signal, acquire first control data according to the first type and the control signal, and send the first control data to the transmitting module.

The transmitting module is configured to: receive, when the current operation mode is the first operation mode, the preset first data sent by the processing module, process the preset first data to form a first infrared signal, transmit the first infrared signal, record the transmitting time, and send the transmitting time to the processing module.

Or, the transmitting module is configured to receive, when the current operation mode is the third operation mode, the first control data sent by the processing module, process the first control data to form a fourth infrared signal, and transmit the fourth infrared signal for controlling the device to be controlled.

The receiving module is configured to: receive, when the current operation mode is the first operation mode, a second infrared signal, record, when it is determined that the received second infrared signal is a reflective signal of the first infrared signal, the receiving time, and send the receiving time to the processing module.

Or, the receiving module is configured to focus, when the current operation mode is the second operation mode, target infrared radiation energy to form a third infrared signal, process the third infrared signal, and send the processed data to the processing module.

In the above-mentioned solution, when the first operation mode is a distance measurement mode, the processing module may be configured to calculate a time difference Δt between the transmitting time and the receiving time, and obtain first measurement data s according to the time difference Δt and an infrared signal transmission speed v, where s=Δt*v/2.

In the above-mentioned solution, when the first operation mode is a distance measurement mode, the transmitting module may be further configured to retransmit the first infrared signal for n times, record time differences Δt₁, Δt₂, ..., Δtₙ between receptions of two successive reflective signals of the reflective signals of the first infrared signals, and send the time differences to the processing module.

Correspondingly, the processing module may be further configured to obtain third measurement data vₙ according to the time differences and the infrared signal transmission speed v, where vₙ=(Δt₁+Δt₂+...+Δtₙ)*v/2n, and n is a positive integer.

In the above-mentioned solution, when the second operation mode is a temperature measurement mode, the processing module may be configured to acquire, according to the first attribute, an emissivity corresponding to the object to be measured, and correct the processed data according to the emissivity to acquire second measurement data.

In the above-mentioned solution, when the third operation mode is a remote control mode, the processing module may be configured to acquire a code table corresponding to the first type according to the first type, and acquire from the code table, first control data corresponding to the control signal according to the control signal.

The examples of the disclosure also provide a computer storage medium having stored thereon a computer program is stored. The computer program may be used for executing the multifunctional infrared signal processing method according to the examples of the disclosure.

According to the multifunctional infrared signal processing method, the mobile terminal and the storage medium provided in the examples of the disclosure, when it is determined by a mobile terminal that a current operation mode is a first operation mode, the mobile terminal processes preset first data to form a first infrared signal, transmits the first infrared signal, and records transmitting time; when it is determined that a received second infrared signal is a reflective signal of the first infrared signal, the mobile terminal records receiving time, and acquires first measurement data according to the transmitting time and the receiving time. Or, when it is determined that the current operation mode is a second operation mode and an attribute of an object to be measured is a first attribute, the mobile terminal focuses target infrared radiation energy to form a third infrared signal, processes the third infrared signal, and acquires second measurement data according to the first attribute and the processed data. Or, when it is determined that the current operation mode is a third operation mode and the type of a device to be controlled is a first type, the mobile terminal detects an input control signal, acquires first control data according to the first type and the control signal, processes the first control data to form a fourth infrared signal, and transmits the fourth infrared signal for controlling the device to be controlled. Thus, measurement and device control under different operation modes are implemented on the mobile terminal, and the problem of inconvenience for a user when measurement and device control are needed currently is solved.

### BRIEF DESCRIPTION OF THE DRAWINGS

Fig. 1 is a flowchart of a multifunctional infrared signal processing method according to a first embodiment of the disclosure;
Fig. 2 is a flowchart of a multifunctional infrared signal processing method according to a second embodiment of the disclosure;
Fig. 3 is a flowchart of a multifunctional infrared signal processing method according to a third embodiment of the disclosure; and
Fig. 4 is a composition structure diagram of a mobile terminal according to the first, second and third embodiments of the disclosure.

### DETAILED DESCRIPTION

In the examples of the disclosure, when it is determined by a mobile terminal that a current operation mode is a first operation mode, the mobile terminal processes preset first data to form a first infrared signal, transmits the first infrared signal, and records transmitting time. When it is determined by the mobile terminal that a received second infrared signal is a reflective signal of the first infrared signal, the mobile terminal records receiving time, and acquires first measurement data according to the transmitting time and the receiving time. Or, when it is determined by the mobile terminal that the current operation mode is a second operation mode and an attribute of an object to be measured is a first attribute, the mobile terminal focuses target infrared radiation energy to form a third infrared signal, processes the third infrared signal, and acquires second measurement data according to the first attribute and the processed data. Or, when it is determined that the current operation mode is a third operation mode and the type of a device to be controlled is a first type, the mobile terminal detects an input control signal, acquires first control data according to the first type and the control signal, processes the first control data to form a fourth infrared signal, and transmits the fourth infrared signal for controlling the device to be controlled.

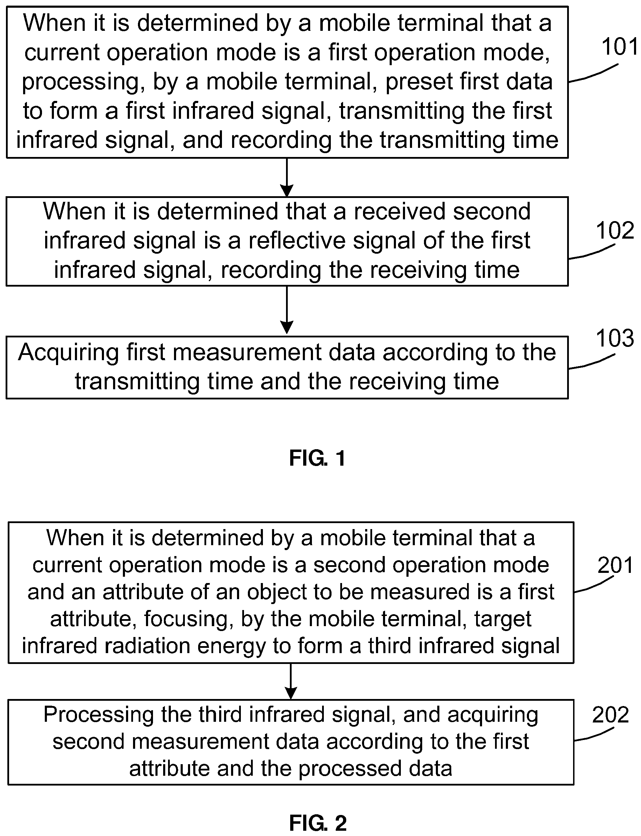

Fig. 1 is a flowchart of a multifunctional infrared signal processing method according to a first example of the disclosure. As shown in Fig. 1, the flow of the multifunctional infrared signal processing method according to the example of the disclosure includes the steps as follows.

In step 101, when it is determined by a mobile terminal that a current operation mode is a first operation mode, a mobile terminal processes preset first data to form a first infrared signal, transmits the first infrared signal, and records transmitting time.

Here, the first operation mode may be a distance measurement mode, and the distance between the mobile terminal and an object may be measured according to the distance measurement mode.

The step that a mobile terminal determines that a current operation mode is a first operation mode includes: the mobile terminal determines that the current operation mode is the first operation mode according to a user's selection.

The first data is any data which can be processed to form the first infrared signal. The central wavelength of the first infrared signal may range from 0.72µm to 0.94µ m.

The step of processing preset first data to form a first infrared signal and transmitting the first infrared signal includes: coding preset first data, performing pulse modulation on the coded data to form a first transmitting signal, performing amplification and infrared light emitting diode conversion on the first transmitting signal to form a first infrared signal, and transmitting the first infrared signal.

Performing pulse modulation on the coded data may include: generating an oscillation signal of which the frequency is about 40KHz, and performing pulse modulation on the 40KHz oscillation signal by utilizing the coded data. Here, the frequency range of the oscillation signal may be [30KHz, 60KHz], and is not limited to 40KHz.

In an example, before the preset first data is coded, the method further includes:
encrypting the first data. Here, the encryption manner may be any one of existing available encryption manners. Thus, it can be ensured that decrypted data is identical to the first data, that is, it is ensured that a reflective signal of the first infrared signal is accurately identified.

In step 102, when it is determined that a received second infrared signal is a reflective signal of the first infrared signal, receiving time is recorded.

Here, determining that a received second infrared signal is a reflective signal of the first infrared signal includes: processing a received second infrared signal to obtain second data, and when it is determined that the first data is the same as the second data, determining that the received second infrared signal is a reflective signal of the first infrared signal.

Processing a received second infrared signal to obtain second data includes: performing photoelectric conversion on a received second infrared signal through a photoelectric detector to form an electric signal, amplifying and demodulating the electric signal to obtain a serial signal, decoding the serial signal, and transcoding the decoded data to obtain the second data.

In an example, when the first data is encrypted before the preset first data is coded, and correspondingly, the method further includes: after the decoded data is transcoded, decrypting the transcoded data. Here, the decryption manner and the encryption manner are encryption and decryption manners corresponding to each other.

In step 103, first measurement data is acquired according to the transmitting time and the receiving time.

The present step includes: calculating a time difference Δt between the transmitting time and the receiving time, and obtaining first measurement data s according to the time difference Δt and an infrared signal transmission speed v, where s=Δt*v/2; v may be 299792458m/s.

In an embodiment, after the first measurement data is acquired, the method further includes: displaying the first measurement data.

In an example, after the present step, the method further includes: retransmitting the first infrared signal for n times, recording time differences Δt₁, Δt₂, ..., Δtₙ between receptions of two successive reflective signals of the reflective signals of the first infrared signals, and obtaining third measurement data vₙ according to the time differences and the infrared signal transmission speed v. vₙ=(Δt₁+Δt₂+...+Δtₙ)*v/2n, and n is a positive integer. Here, the third measurement data vₙ is a moving speed of an object to be measured.

It is to be noted that when the above-mentioned method in the example of the disclosure is used to measure the moving speed of the object, it is to be ensured that the mobile terminal and the object to be measured are on the same straight line.

Fig. 2 is a flowchart of a multifunctional infrared signal processing method according to a second example of the disclosure. As shown in Fig. 2, the flow of the multifunctional infrared signal processing method according to the example of the disclosure includes the steps as follows.

In step 201, when it is determined by the mobile terminal that a current operation mode is a second operation mode and an attribute of an object to be measured is a first attribute, the mobile terminal focuses target infrared radiation energy to form a third infrared signal.

Here, the second operation mode may be a temperature measurement mode, and the temperature of the object to be measured can be measured according to the temperature measurement mode.

The step that a mobile terminal determines that a current operation mode is a second operation mode includes: the mobile terminal determines that the current operation mode is the second operation mode according to a user's selection.

The first attribute may be any one of metal, such as aluminum or gold, or any one of nonmetal, such as ice or glass, or may be a human body. The object to be measured, having each attribute, corresponds to an emissivity magnitude.

Focusing target infrared radiation energy to form a third infrared signal includes: aggregating target infrared radiation energy in a field of view, and focusing the target infrared radiation energy to a photoelectric detector to form a third infrared signal.

In step 202, the third infrared signal is processed, and second measurement data is acquired according to the first attribute and the processed data.

Here, processing the third infrared signal may include: performing photoelectric conversion on the third infrared signal through the photoelectric detector to form an electric signal, amplifying and demodulating the electric signal to obtain a serial signal, decoding and transcoding the serial signal, and converting the transcoded data to obtain processed data according to a correspondence between radiation energy and temperature; here, the processed data is the measured temperature of the object to be measured.

Acquiring second measurement data according to the first attribute and the processed data may include: acquiring the emissivity of the object to be measured according to the first attribute, and correcting the processed data according to the emissivity to acquire second measurement data. Here, the processed data is the data obtained after processing, and the second measurement data is an actual temperature, for which the emissivity has been corrected, of the object to be measured.

When the temperature of the human body is measured by using the mobile terminal, it is better for the mobile terminal to be closer to the human body. In an example, the optional range of the distance is (3cm, 15cm).

In an example, after the present step, the method further includes: when it is determined that the second measurement data exceeds a preset threshold, giving an alarm, and displaying the second measurement data. Here, the preset threshold may be set according to the property of the object to be measured. When the object to be measured is the human body, the preset threshold may be 38 degrees.

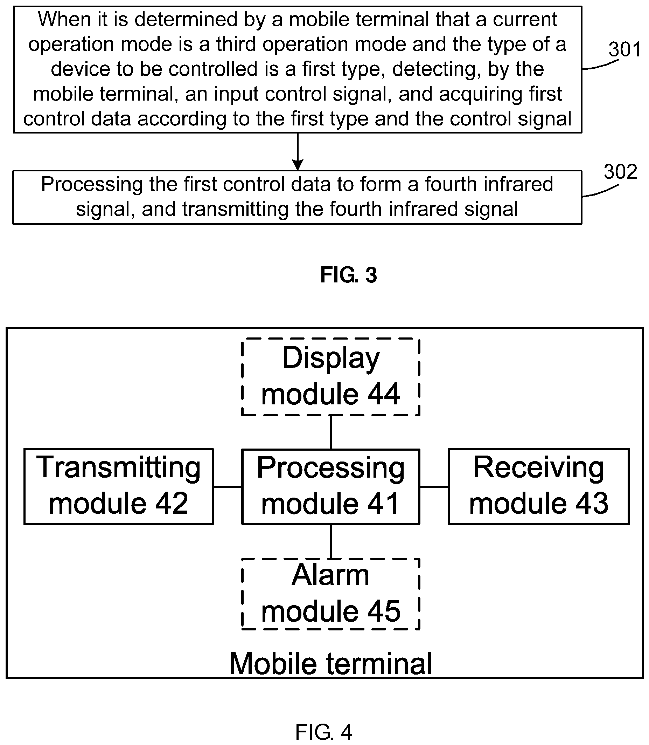

Fig. 3 is a flowchart of a multifunctional infrared signal processing method according to a third example of the disclosure. As shown in Fig. 3, the flow of the multifunctional infrared signal processing method according to the example of the disclosure includes the steps as follows.

In step 301, when it is determined by a mobile terminal that a current operation mode is a third operation mode and the type of a device to be controlled is a first type, a mobile terminal detects an input control signal, and acquires first control data according to the first type and the control signal.

Here, the third operation mode may be a remote control mode, and the device to be controlled can be controlled by the mobile terminal according to the remote control mode. The devices to be controlled may include a TV, an air conditioner and the like.

The step that a mobile terminal determines that a current operation mode is a third operation mode may include: the mobile terminal determines that the current operation mode is the third operation mode according to a user's selection.

The first type may be a device of a specific brand such as a Changhong TV, a Konka TV, a Gree air conditioner, a Haier air conditioner or the like.

The input control signal may be a key value corresponding to user keypress.

Acquiring first control data according to the first type and the control signal may include: acquiring a code table corresponding to the first type according to the first type, and acquiring from the code table, first control data corresponding to the control signal according to the control signal. For example, when the first type is the Changhong TV, the code table of the first type is: a code table of a remote controller corresponding to the Changhong TV; and the first control data corresponding to the control signal in the code table is: code data corresponding to the user key value in the code table of the remote controller corresponding to the Changhong TV, the code data is the first control data.

In step 302, the first control data is processed to form a fourth infrared signal, and the fourth infrared signal is transmitted.

The present step may include: coding the first control data, performing pulse modulation on the coded data to form a second transmitting signal, performing amplification and infrared light emitting diode conversion on the second transmitting signal to form a fourth infrared signal, and transmitting the fourth infrared signal for controlling the device to be controlled.

Here, performing pulse modulation on the coded data may include: generating an oscillation signal having a frequency of about 40KHz, and performing pulse modulation on the oscillation signal having the frequency of 40KHz by utilizing the coded data. Here, the frequency range of the oscillation signal may be [30KHz, 60KHz], and is not limited to 40KHz.

Fig. 4 is a schematic view of a structure of a mobile terminal according to a first example of the disclosure. The operation mode is a first operation mode in the example of the disclosure. As shown in Fig. 4, the mobile terminal in the first example of the disclosure includes a processing module 41, a transmitting module 42 and a receiving module 43.

The processing module 41 is configured to send, when it is determined that the current operation mode is the first operation mode, preset first data to the transmitting module, and acquire first measurement data according to transmitting time sent by the transmitting module and receiving time sent by the receiving module.

The transmitting module 42 is configured to receive the preset first data sent by the processing module, process the preset first data to form a first infrared signal, transmit the first infrared signal, record the transmitting time, and send the transmitting time to the processing module.

The receiving module 43 is configured to receive a second infrared signal, record, when it is determined that the received second infrared signal is a reflective signal of the first infrared signal, the receiving time, and send the receiving time to the processing module.

Here, the processing module 41 may determine that the current operation mode is the first operation mode according to a user's selection. The first operation mode is a distance measurement mode.

In an example, the operation that the transmitting module 42 processes preset first data to form a first infrared signal and transmits the first infrared signal may include: the transmitting module 42 codes preset first data, performs pulse modulation on the coded data to form a first transmitting signal, performs amplification and infrared light emitting diode conversion on the first transmitting signal to form a first infrared signal, and transmits the first infrared signal.

The operation that the transmitting module 42 performs pulse modulation on the coded data may include: the transmitting module 42 generates an oscillation signal having a frequency of about 40KHz, and performs pulse modulation on the oscillation signal having the frequency of 40KHz by utilizing the coded data. Here, the frequency range of the oscillation signal may be [30KHz, 60KHz], and is not limited to 40KHz.

In an example, the processing module 41 may be further configured to encrypt and decrypt the first data. Here, the encryption manner may be any one of existing available encryption manners.

In an example, the operation that the receiving module 43 determines that a received second infrared signal is a reflective signal of the first infrared signal may include: the receiving module 43 processes a received second infrared signal to obtain second data, and determines that the received second infrared signal is a reflective signal of the first infrared signal when it is determined that the first data is the same as the second data.

The operation that the receiving module 43 processes a received second infrared signal to obtain second data may include: a photoelectric detector performs photoelectric conversion on the second infrared signal received by the receiving module 43 to form an electric signal, the electric signal is amplified and demodulated to obtain a serial signal, the serial signal is decoded, and the decoded data is transcoded to obtain the second data.

In an example, the operation that the processing module 41 acquires first measurement data according to the transmitting time and the receiving time may include: the processing module 41 may calculate a time difference Δt between the transmitting time and the receiving time, and obtain first measurement data s according to the time difference Δt and an infrared signal transmission speed v, where s=Δt*v/2.

In an example, the transmitting module 42 may be further configured to retransmit the first infrared signal for n times, record time differences Δt₁, Δt₂, ..., Δtₙ between receptions of two successive reflective signals of the reflective signals of the first infrared signals, and send the time differences to the processing module 41.

Correspondingly, the processing module 41 may be further configured to obtain third measurement data vₙ according to the time differences and the infrared signal transmission speed v, where vₙ=(Δt₁+Δt₂+...+Δtₙ)*v/2n, and n is a positive integer.

In an example, the mobile terminal may further include a display module 45, configured to display the first measurement data and the third measurement data.

Fig. 4 shows a schematic view of a structure of a mobile terminal according to a second example of the disclosure. The operation mode is a second operation mode in the example of the disclosure. As shown in Fig. 4, the mobile terminal in the second example of the disclosure includes a processing module 41 and a receiving module 43.

The processing module 41 is configured to trigger, when it is determined that the current operation mode is the second operation mode, the receiving module 43, and acquire, when it is determined that an attribute of an object to be measured is a first attribute, second measurement data according to the first attribute and the processed data sent by the receiving module 43.

The receiving module 43 is configured to focus target infrared radiation energy to form a third infrared signal, process the third infrared signal, and send the processed data to the processing module 41.

Here, the processing module 41 may determine that the current operation mode is the second operation mode according to a user's selection. The second operation mode is a temperature measurement mode.

The first attribute may be any one of metal such as aluminum or gold, or any one of nonmetal such as ice or glass, or may be a human body. The object to be measured, having each attribute, corresponds to an emissivity magnitude.

In an example, the operation that the receiving module 43 focuses target infrared radiation energy to form a third infrared signal may include: the receiving module 43 aggregates target infrared radiation energy in a field of view, and focuses the target infrared radiation energy to a photoelectric detector to form a third infrared signal. Here, the receiving module 43 may include the photoelectric detector and the like.

In an example, the operation that the receiving module 43 processes the third infrared signal may include: performing photoelectric conversion on the third infrared signal through the photoelectric detector in the receiving module 43 to form an electric signal, amplifying and demodulating the electric signal to obtain a serial signal, decoding and transcoding the serial signal, and converting the transcoded data according to a correspondence between radiation energy and temperature to obtain processed data. Here, the processed data is the measured temperature of the object to be measured.

In an example, the operation that the processing module 41 acquires second measurement data according to the first attribute and the processed data may include: the processing module 41 acquires the emissivity of the object to be measured according to the first attribute, and corrects the processed data according to the emissivity to acquire second measurement data.

When the temperature of the human body is measured by using the mobile terminal, it is better for the mobile terminal to be closer to the human body. In an example, the optional range of the distance may be (3cm, 15cm).

In an example, the mobile terminal may further include a display module 44, configured to display the second measurement data.

The processing module 41 may be further configured to trigger, when it is determined that the second measurement data exceeds a preset threshold, an alarm module 45.

Correspondingly, the mobile terminal may further include the alarm module 45, configured to provide an alarm.

Fig. 4 shows a schematic view of a structure of a mobile terminal according to a third example of the disclosure. The operation mode is a third operation mode in the example of the disclosure. As shown in Fig. 4, the mobile terminal in the third example of the disclosure includes a processing module 41 and a transmitting module 42.

The processing module 41 is configured to detect, when it is determined that the current operation mode is the third operation mode and the type of a device to be controlled is a first type, an input control signal, acquire first control data according to the first type and the control signal, and send the first control data to the transmitting module 42.

The transmitting module 42 is configured to receive the first control data sent by the processing module 41, process the first control data to form a fourth infrared signal, and transmit the fourth infrared signal. The fourth infrared signal is configured for controlling the device to be controlled.

Here, the processing module 41 may determine that the current operation mode is the third operation mode according to a user's selection. The third operation mode is a remote control mode.

The devices to be controlled may include: a TV, an air conditioner and the like.

The first type may be a device of a specific brand such as a Changhong TV, a Konka TV, a Gree air conditioner, a Haier air conditioner.

The input control signal may be a key value corresponding to user keypress.

In an example, the operation that the processing module 41 acquires first control data according to the first type and the control signal may include: the processing module 41 acquires a code table corresponding to the first type according to the first type, and acquires from the code table, first control data corresponding to the control signal according to the control signal.

The operation that the processing module 41 acquires first control data according to the first type and the control signal may include: the processing module 41 acquires a code table corresponding to the first type according to the first type, and acquires from the code table, first control data corresponding to the control signal according to the control signal. For example, when the first type is the Changhong TV, the code table of the first type is: a code table of a remote controller corresponding to the Changhong TV; and the first control data corresponding to the control signal in the code table is: code data corresponding to the user key value in the code table of the remote controller corresponding to the Changhong TV, and the code data is the first control data.

The operation that the transmitting module 42 processes first control data to form a fourth infrared signal and transmits the fourth infrared signal may include: the transmitting module 42 codes the first control data, performs pulse modulation on the coded data to form a second transmitting signal, performs amplification and infrared light emitting diode conversion on the second transmitting signal to form a fourth infrared signal, and transmits the fourth infrared signal. The fourth infrared signal is configured for controlling the device to be controlled.

Here, the operation that the transmitting module 42 performs pulse modulation on the coded data may include: the transmitting module 42 generates an oscillation signal having a frequency of about 40KHz, and performs pulse modulation on the oscillation signal having the frequency of 40KHz by utilizing the coded data. Here, the frequency range of the oscillation signal may be [30KHz, 60KHz], and is not limited to 40KHz.

The processing module, the transmitting module, the receiving module, the display module and the alarm module of the mobile terminal provided in the examples of the disclosure may be implemented by a processor, or may be implemented, certainly, by a specific logic circuit. Here, the processor may be a processor on the mobile terminal or a server. During practical application, the processor may be a Central Processing Unit (CPU), a Micro Processing Unit (MPU), a Digital Signal Processor (DSP) or a Field-Programmable Gate Array (FPGA).

In the examples of the disclosure, when the multifunctional infrared signal processing method is implemented in a form of software function unit, and is sold or used as an independent product, the product may be stored in a computer readable storage medium. Based on such an understanding, the technical solutions of the examples of the disclosure substantially or parts making contributions to the conventional art may be embodied in form of software product. The computer software product is stored in a storage medium, containing a plurality of instructions configured to enable a piece of computer equipment (which may be a personal computer, a server, network equipment or the like) to execute all or part of the method in each example of the disclosure. The above-mentioned storage medium includes various medium, such as a U disk, a removable hard disk, a Read-Only Memory (ROM), a magnetic disk and an optical disc, which are capable of storing program codes. Thus, the examples of the disclosure are not limited to combination of any specific hardware and software.

Correspondingly, the examples of the disclosure also provide a computer storage medium having stored thereon a computer program. The computer program is used for executing the multifunctional infrared signal processing method according to the examples of the disclosure.

The above is only the preferable examples of the disclosure and not intended to limit the scope of protection of the disclosure.

## Claims

1. A multifunctional infrared signal processing method comprising:
when it is determined by a mobile terminal that a current operation mode is a first operation mode, processing, by the mobile terminal, preset first data to form a first infrared signal, transmitting the first infrared signal, and recording transmitting time (101); when it is determined by the mobile terminal that a received second infrared signal is a reflective signal of the first infrared signal, recording receiving time (102); acquiring first measurement data according to the transmitting time and the receiving time (103);
or, when it is determined by the mobile terminal that the current operation mode is a second operation mode and an attribute of an object to be measured is a first attribute, focusing target infrared radiation energy to form a third infrared signal (201); processing the third infrared signal, and acquiring second measurement data according to the first attribute and data obtained by processing the third infrared signal (202), wherein focusing target infrared radiation energy to form the third infrared signal (201) comprising: aggregating target infrared radiation energy in a field of view, and focusing the target infrared radiation energy to a photoelectric detector to form the third infrared signal;
or, when it is determined by the mobile terminal that the current operation mode is a third operation mode and a type of a device to be controlled is a first type, detecting an input control signal, and acquiring first control data according to the first type and the input control signal (301); and processing the first control data to form a fourth infrared signal, and transmitting the fourth infrared signal for controlling the device to be controlled (302), wherein processing the first control data to form the fourth infrared signal (302) comprising: coding the first control data, performing pulse modulation on the coded first control data to form a second transmitting signal, performing amplification and infrared light emitting diode conversion on the second transmitting signal to form the fourth infrared signal.

2. The method according to claim 1, wherein the first operation mode is a distance measurement mode, and the step of acquiring first measurement data according to the transmitting time and the receiving time comprises:
calculating a time difference Δt between the transmitting time and the receiving time, and obtaining first measurement data s according to the time difference Δt and an infrared signal transmission speed v, where s=Δt*v/2.

3. The method according to claim 1 or 2, wherein the first operation mode is a distance measurement mode, and after acquiring the first measurement data according to the transmitting time and the receiving time, the method further comprises:
retransmitting the first infrared signal for n times, recording time differences Δt₁, Δt₂, ..., Δtₙ between receptions of two successive reflective signals of the reflective signals of the first infrared signals, and obtaining third measurement data vₙ according to the time differences and the infrared signal transmission speed v, where vₙ=(Δt₁+Δt₂+...+Δtₙ)*v/2n, n being a positive integer.

4. The method according to claim 1, wherein the second operation mode is a temperature measurement mode, and the step of acquiring second measurement data according to the first attribute and the data obtained by processing the third infrared signal comprises:
acquiring, according to the first attribute, an emissivity corresponding to the object to be measured, and correcting the data obtained by processing the third infrared signal according to the emissivity to acquire second measurement data.

5. The method according to claim 1, wherein the third operation mode is a remote control mode, and the step of acquiring first control data according to the first type and the input control signal comprises: acquiring a code table corresponding to the first type according to the first type, and acquiring from the code table, first control data corresponding to the input control signal according to the input control signal.

6. A mobile terminal comprising a processing module (41), a transmitting module (42) and a receiving module (43), wherein
the processing module (41) is configured to: send, when it is determined that a current operation mode is a first operation mode, preset first data to the transmitting module, and acquire first measurement data according to transmitting time sent by the transmitting module and receiving time sent by the receiving module;
or, trigger, when it is determined that the current operation mode is a second operation mode, the receiving module (43), and acquire, when it is determined that an attribute of an object to be measured is a first attribute, second measurement data according to the first attribute and the data obtained by processing the third infrared signal sent by the receiving module;
or, detect, when it is determined that the current operation mode is a third operation mode and a type of a device to be controlled is a first type, an input control signal, acquire first control data according to the first type and the input control signal, and send the first control data to the transmitting module (42);
the transmitting module (42) is configured to: receive, when the current operation mode is the first operation mode, the preset first data sent by the processing module (41), process the preset first data to form a first infrared signal, transmit the first infrared signal, record the transmitting time, and send the transmitting time to the processing module;
or, receive, when the current operation mode is the third operation mode, the first control data sent by the processing module (41), code the first control data, perform pulse modulation on the coded first control data to form a second transmitting signal, perform amplification and infrared light emitting diode conversion on the second transmitting signal to form a fourth infrared signal, and transmit the fourth infrared signal for controlling the device to be controlled; and
the receiving module (43) is configured to: receive, when the current operation mode is the first operation mode, a second infrared signal, record, when it is determined that the received second infrared signal is a reflective signal of the first infrared signal, the receiving time, and send the receiving time to the processing module;
or, aggregate, when the current operation mode is the second operation mode, target infrared radiation energy in a field of view, and focus the target infrared radiation energy to a photoelectric detector to form a third infrared signal, process the third infrared signal, and send the data obtained by processing the third infrared signal to the processing module (41).

7. The mobile terminal according to claim 6, wherein when the first operation mode is a distance measurement mode, the processing module (41) is configured to calculate a time difference Δt between the transmitting time and the receiving time, and obtain first measurement data s according to the time difference Δt and an infrared signal transmission speed v, where s=Δt*v/2.

8. The mobile terminal according to claim 6 or 7, wherein when the first operation mode is a distance measurement mode, the transmitting module (42) is further configured to retransmit the first infrared signal for n times, record time differences Δt₁, Δt₂, ..., Δtₙ between receptions of two successive reflective signals of the reflective signals of the first infrared signals, and send the time differences to the processing module; and
correspondingly, the processing module (41) is further configured to obtain third measurement data vₙ according to the time differences and the infrared signal transmission speed v, where vₙ=(Δt₁+Δt₂+...+Δtₙ)*v/2n, n being a positive integer.

9. The mobile terminal according to claim 6, wherein when the second operation mode is a temperature measurement mode, the processing module (41) is configured to acquire, according to the first attribute, an emissivity corresponding to the object to be measured, and correct the data obtained by processing the third infrared signal according to the emissivity to acquire second measurement data.

10. The mobile terminal according to claim 6, wherein when the third operation mode is a remote control mode, the processing module (41) is configured to acquire a code table corresponding to the first type according to the first type, and acquire from the code table, first control data corresponding to the input control signal according to the input control signal.

11. A computer storage medium having stored thereon computer executable instructions for executing, when run, a multifunctional infrared signal processing method comprising:
when it is determined by a mobile terminal that a current operation mode is a first operation mode, processing, by the mobile terminal, preset first data to form a first infrared signal, transmitting the first infrared signal, and recording transmitting time (101); when it is determined by the mobile terminal that a received second infrared signal is a reflective signal of the first infrared signal, recording receiving time (102); acquiring first measurement data according to the transmitting time and the receiving time (103);
or, when it is determined by the mobile terminal that the current operation mode is a second operation mode and an attribute of an object to be measured is a first attribute, focusing target infrared radiation energy to form a third infrared signal (201); processing the third infrared signal, and acquiring second measurement data according to the first attribute and the data obtained by processing the third infrared signal (202), wherein focusing target infrared radiation energy to form the third infrared signal (201) comprising: aggregating target infrared radiation energy in a field of view, and focusing the target infrared radiation energy to a photoelectric detector to form the third infrared signal;
or, when it is determined by the mobile terminal that the current operation mode is a third operation mode and a type of a device to be controlled is a first type, detecting an input control signal, and acquiring first control data according to the first type and the input control signal (301); and processing the first control data to form a fourth infrared signal, and transmitting the fourth infrared signal for controlling the device to be controlled (302), wherein processing the first control data to form the fourth infrared signal comprising: coding the first control data, performing pulse modulation on the coded first control data to form a second transmitting signal, performing amplification and infrared light emitting diode conversion on the second transmitting signal to form the fourth infrared signal.

12. The computer storage medium according to claim 11, wherein the first operation mode is a distance measurement mode, and the step of acquiring first measurement data according to the transmitting time and the receiving time comprises:
calculating a time difference Δt between the transmitting time and the receiving time, and obtaining first measurement data s according to the time difference Δt and an infrared signal transmission speed v, where s=Δt*v/2.

13. The computer storage medium according to claim 11 or 12, wherein the first operation mode is a distance measurement mode, and after acquiring the first measurement data according to the transmitting time and the receiving time, the method further comprises:
retransmitting the first infrared signal for n times, recording time differences Δt₁, Δt₂, ..., Δtₙ between receptions of two successive reflective signals of the reflective signals of the first infrared signals, and obtaining third measurement data vₙ according to the time differences and the infrared signal transmission speed v, where vₙ=(Δt₁+Δt₂+...+Δtₙ)*v/2n, n being a positive integer.

14. The computer storage medium according to claim 11, wherein the second operation mode is a temperature measurement mode, and the step of acquiring second measurement data according to the first attribute and the data obtained by processing the third infrared signal comprises:
acquiring, according to the first attribute, an emissivity corresponding to the object to be measured, and correcting the data obtained by processing the third infrared signal according to the emissivity to acquire second measurement data.

15. The computer storage medium according to claim 11, wherein the third operation mode is a remote control mode, and the step of acquiring first control data according to the first type and the control signal comprises:
acquiring a code table corresponding to the first type according to the first type, and acquiring from the code table, first control data corresponding to the input control signal according to the input control signal.

## Patentansprüche

1. Multifunktionelles Infrarotsignalverarbeitungsverfahren, wobei das Verfahren Folgendes umfasst:
wenn durch ein mobiles Endgerät bestimmt wird, dass es sich bei einem aktuellen Betriebsmodus um einen ersten Betriebsmodus handelt, Verarbeiten, durch das mobile Endgerät, von voreingestellten ersten Daten, um ein erstes Infrarotsignal zu bilden, Aussenden des ersten Infrarotsignals und Aufzeichnen des Aussendungszeitpunkts (101); wenn durch das mobile Endgerät bestimmt wird, dass es sich bei einem empfangenen zweiten Infrarotsignal um ein Reflexionssignal des ersten Infrarotsignals handelt, Aufzeichnen des Empfangszeitpunkts (102); Erfassen von ersten Messdaten gemäß dem Aussendungszeitpunkt und dem Empfangszeitpunkt (103);
oder, wenn durch das mobile Endgerät bestimmt wird, dass es sich bei dem aktuellen Betriebsmodus um einen zweiten Betriebsmodus handelt und es sich bei einem Attribut eines zu messenden Objektes um ein erstes Attribut handelt, Fokussieren von Ziel-Infrarotstrahlungsenergie, um ein drittes Infrarotsignal zu bilden (201); Verarbeiten des dritten Infrarotsignals und Erfassen zweiter Messdaten gemäß dem ersten Attribut und den durch die Verarbeitung des dritten Infrarotsignals erhaltenen Daten (202), wobei das Fokussieren von Ziel-Infrarotstrahlungsenergie, um das dritte Infrarotsignal zu bilden (201), Folgendes umfasst: Bündeln von Ziel-Infrarotstrahlungsenergie in einem Blickfeld und Fokussieren der Ziel-Infrarotstrahlungsenergie auf einen photoelektrischen Detektor, um das dritte Infrarotsignal zu bilden;
oder, wenn durch das mobile Endgerät bestimmt wird, dass es sich bei dem aktuellen Betriebsmodus um einen dritten Betriebsmodus handelt und es sich bei der Art eines zu steuernden Geräts um eine erste Art handelt, Erkennen eines Eingangssteuersignals und Erfassen erster Steuerdaten gemäß der ersten Art und dem Eingangssteuersignal (301); und Verarbeiten der ersten Steuerdaten, um ein viertes Infrarotsignal zu bilden, und Aussenden des vierten Infrarotsignals zur Steuerung des zu steuernden Geräts (302), wobei das Verarbeiten der ersten Steuerdaten, um das vierte Infrarotsignal zu bilden (302), Folgendes umfasst: Codieren der ersten Steuerdaten, Durchführen einer Impulsmodulation an den codierten ersten Steuerdaten, um ein zweites Aussendungssignal zu bilden, Durchführen einer Verstärkung und Infrarotlichtemissionsdiodenumwandlung an dem zweiten Aussendungssignal, um das vierte Infrarotsignal zu bilden.

2. Verfahren nach Anspruch 1, wobei es sich bei dem ersten Betriebsmodus um einen Entfernungsmessmodus handelt und der Schritt zur Erfassung der ersten Messdaten gemäß dem Aussendungszeitpunkt und dem Empfangszeitpunkt Folgendes umfasst:
Berechnen einer Zeitdifferenz Δt zwischen dem Aussendungszeitpunkt und dem Empfangszeitpunkt, und Erhalten von ersten Messdaten s gemäß der Zeitdifferenz Δt und einer Infrarotsignalübertragungsgeschwindigkeit v, wobei s = Δt*v/2.

3. Verfahren nach Anspruch 1 oder 2, wobei es sich bei dem ersten Betriebsmodus um einen Entfernungsmessmodus handelt und nach der Erfassung der ersten Messdaten gemäß dem Aussendungszeitpunkt und dem Empfangszeitpunkt das Verfahren weiterhin Folgendes umfasst:
erneutes Aussenden des ersten Infrarotsignals n Mal, Aufzeichnen der Zeitdifferenzen Δt₁, Δt₂, ..., Δtₙ zwischen dem Empfang zweier aufeinanderfolgender Reflexionssignale aus der Menge der Reflexionssignale der ersten Infrarotsignals, und Erhalten dritter Messdaten vₙ gemäß der Zeitdifferenzen und der Infrarotsignalübertragungsgeschwindigkeit v, wobei vₙ = (Δt₁ + Δt₂ + ... + Δtₙ)*v/2n, wobei es sich bei n um eine positive ganze Zahl handelt.

4. Verfahren nach Anspruch 1, wobei es sich bei dem zweiten Betriebsmodus um einen Temperaturmessmodus handelt und der Schritt zur Erfassung zweiter Messdaten gemäß dem ersten Attribut und den durch die Verarbeitung des dritten Infrarotsignals erhaltenen Daten Folgendes umfasst:
gemäß dem ersten Attribut Erfassen eines dem zu messenden Objekt entsprechenden Emissionsvermögens, und Korrigieren der durch die Verarbeitung des dritten Infrarotsignals erhaltenen Daten gemäß dem Emissionsvermögen, um zweite Messdaten zu erfassen.

5. Verfahren nach Anspruch 1, wobei es sich bei dem dritten Betriebsmodus um einen Fernsteuerungsmodus handelt und der Schritt zur Erfassung der ersten Messdaten gemäß der ersten Art und dem Eingangssteuersignal Folgendes umfasst:
gemäß der ersten Art Erfassen einer der ersten Art entsprechenden Codetabelle, und Erfassen, aus der Codetabelle, von ersten, dem Eingangssteuersignal entsprechenden Steuerdaten gemäß dem Eingangssteuersignal.

6. Mobiles Endgerät, umfassend ein Verarbeitungsmodul (41), ein Aussendungsmodul (42) und ein Empfangsmodul (43), wobei
das Verarbeitungsmodul (41) zu Folgendem ausgelegt ist: wenn bestimmt wird, dass es sich bei einem aktuellen Betriebsmodus um einen ersten Betriebsmodus handelt, Senden voreingestellter erster Daten an das Aussendungsmodul, und Erfassen von ersten Messdaten gemäß dem von dem Aussendungsmodul gesendeten Aussendungszeitpunkt und dem von dem Empfangsmodul gesendeten Empfangszeitpunkt;
oder, wenn bestimmt wird, dass es sich bei dem aktuellen Betriebsmodus um einen zweiten Betriebsmodus handelt, Auslösen des Empfangsmoduls (43), und, wenn bestimmt wird, dass es sich bei einem Attribut eines zu messenden Objekts um ein erstes Attribut handelt, Erfassen von zweiten Messdaten gemäß dem ersten Attribut und den durch Verarbeitung des von dem Empfangsmodul gesendeten dritten Infrarotsignals erhaltenen Daten;
oder, wenn bestimmt wird, dass es sich bei dem aktuellen Betriebsmodus um einen dritten Betriebsmodus handelt und es sich bei der Art eines zu steuernden Geräts um eine erste Art handelt, Erkennen eines Eingangssteuersignals, Erfassen erster Steuerdaten gemäß der ersten Art und dem Eingangssteuersignal, und Senden der ersten Steuerdaten an das Aussendungsmodul (42);
das Aussendungsmodul (42) zu Folgendem ausgelegt ist: wenn es sich bei dem aktuellen Betriebsmodus um den ersten Betriebsmodus handelt, Empfangen der von dem Verarbeitungsmodul (41) gesendeten voreingestellten ersten Daten, Verarbeiten der voreingestellten ersten Daten, um ein erstes Infrarotsignal zu bilden, Aussenden des ersten Infrarotsignals, Aufzeichnen des Aussendungszeitpunkts und Senden des Aussendungszeitpunkts an das Verarbeitungsmodul;
oder, wenn es sich bei dem aktuellen Betriebsmodus um den dritten Betriebsmodus handelt, Empfangen der von dem Verarbeitungsmodul (41) gesendeten ersten Steuerdaten, Codieren der ersten Steuerdaten, Durchführen einer Impulsmodulation an den codierten ersten Steuerdaten, um ein zweites Aussendungssignal zu bilden, Durchführen einer Verstärkung und Infrarotlichtemissionsdiodenumwandlung an dem zweiten Aussendungssignal, um ein viertes Infrarotsignal zu bilden, und Aussenden des vierten Infrarotsignals zur Steuerung des zu steuernden Geräts; und
das Empfangsmodul (43) zu Folgendem ausgelegt ist: Empfangen eines zweiten Infrarotsignals, wenn es sich bei dem aktuellen Betriebsmodus um den ersten Betriebsmodus handelt, wenn bestimmt wird, dass es sich bei dem empfangenen zweiten Infrarotsignal um ein Reflexionssignal des ersten Infrarotsignals handelt, Aufzeichnen des Empfangszeitpunkts, und Senden des Empfangszeitpunkts an das Verarbeitungsmodul;
oder, wenn es sich bei dem aktuellen Betriebsmodus um den zweiten Betriebsmodus handelt, Bündeln von Ziel-Infrarotstrahlungsenergie in einem Blickfeld, und Fokussieren der Ziel-Infrarotstrahlungsenergie auf einen photoelektrischen Detektor, um ein drittes Infrarotsignal zu bilden, und Senden der durch Verarbeitung des dritten Infrarotsignals erhaltenen Daten an das Verarbeitungsmodul (41).

7. Mobiles Endgerät nach Anspruch 6, wobei, wenn es sich bei dem ersten Betriebsmodus um einen Entfernungsmessmodus handelt, das Verarbeitungsmodul (41) ausgelegt ist zum Berechnen einer Zeitdifferenz Δt zwischen dem Aussendungszeitpunkt und dem Empfangszeitpunkt, und Erhalten von ersten Messdaten s gemäß der Zeitdifferenz Δt und einer Infrarotsignalübertragungsgeschwindigkeit v, wobei s = Δt*v/2.

8. Mobiles Endgerät nach Anspruch 6 oder 7, wobei, wenn es sich bei dem ersten Betriebsmodus um einen Entfernungsmessmodus handelt, das Aussendungsmodul (42) ausgelegt ist zum erneuten Aussenden des ersten Infrarotsignals n Mal, Aufzeichnen der Zeitdifferenzen Δt₁, Δt₂, ..., Δtₙ zwischen dem Empfang zweier aufeinander folgender Reflexionssignale aus der Menge der Reflexionssignale der ersten Infrarotsignals, und Senden der Zeitdifferenzen an das Verarbeitungsmodul; und
dementsprechend das Verarbeitungsmodul (41) weiterhin ausgelegt ist zum Erhalten dritter Messdaten vₙ gemäß der Zeitdifferenzen und der Infrarotsignalübertragungsgeschwindigkeit v, wobei vₙ = (Δt₁ + Δt₂ + ... + Δtₙ)*v/2n, wobei es sich bei n um eine positive ganze Zahl handelt.

9. Mobiles Endgerät nach Anspruch 6, wobei, wenn es sich bei dem zweiten Betriebsmodus um einen Temperaturmessmodus handelt, das Verarbeitungsmodul (41) ausgelegt ist zum Erfassen eines dem zu messenden Objekt entsprechenden Emissionsvermögens gemäß dem ersten Attribut, und Korrigieren der durch die Verarbeitung des dritten Infrarotsignals erhaltenen Daten gemäß dem Emissionsvermögen, um zweite Messdaten zu erfassen.

10. Mobiles Endgerät nach Anspruch 6, wobei, wenn es sich bei dem dritten Betriebsmodus um einen Fernsteuerungsmodus handelt, das Verarbeitungsmodul (41) ausgelegt ist zum Erfassen einer der ersten Art entsprechenden Codetabelle gemäß der ersten Art, und Erfassen, aus der Codetabelle, von ersten, dem Eingangssteuersignal entsprechenden Steuerdaten gemäß dem Eingangssteuersignal.

11. Computerspeichermedium, auf dem computerausführbare Anweisungen gespeichert sind, um ein multifunktionelles Infrarotsignalverarbeitungsverfahren durchzuführen, wenn sie ausgeführt werden, wobei das Verfahren Folgendes umfasst:
wenn durch ein mobiles Endgerät bestimmt wird, dass es sich bei einem aktuellen Betriebsmodus um einen ersten Betriebsmodus handelt, Verarbeiten, durch das mobile Endgerät, von voreingestellten ersten Daten, um ein erstes Infrarotsignal zu bilden, Aussenden des ersten Infrarotsignals und Aufzeichnen des Aussendungszeitpunkts (101); wenn durch das mobile Endgerät bestimmt wird, dass es sich bei einem empfangenen zweiten Infrarotsignal um ein reflektiertes Signal des ersten Infrarotsignals handelt, Aufzeichnen des Empfangszeitpunkts (102); Erfassen von ersten Messdaten gemäß dem Aussendungszeitpunkt und dem Empfangszeitpunkt (103);
oder, wenn durch das mobile Endgerät bestimmt wird, dass es sich bei dem aktuellen Betriebsmodus um einen zweiten Betriebsmodus handelt und es sich bei einem Attribut eines zu messenden Objektes um ein erstes Attribut handelt, Fokussieren von Ziel-Infrarotstrahlungsenergie, um ein drittes Infrarotsignal zu bilden (201); Verarbeiten des dritten Infrarotsignals und Erfassen zweiter Messdaten gemäß dem ersten Attribut und den durch die Verarbeitung des dritten Infrarotsignals erhaltenen Daten (202), wobei das Fokussieren von Ziel-Infrarotstrahlungsenergie, um das dritte Infrarotsignal zu bilden (201), Folgendes umfasst: Bündeln von Ziel-Infrarotstrahlungsenergie in einem Blickfeld und Fokussieren der Ziel-Infrarotstrahlungsenergie auf einen photoelektrischen Detektor, um das dritte Infrarotsignal zu bilden;
oder, wenn durch das mobile Endgerät bestimmt wird, dass es sich bei dem aktuellen Betriebsmodus um einen dritten Betriebsmodus handelt und es sich bei der Art eines zu steuernden Geräts um eine erste Art handelt, Erkennen eines Eingangssteuersignals und Erfassen erster Steuerdaten gemäß der ersten Art und dem Eingangssteuersignal (301); und Verarbeiten der ersten Steuerdaten, um ein viertes Infrarotsignal zu bilden, und Aussenden des vierten Infrarotsignals zur Steuerung des zu steuernden Geräts (302), wobei das Verarbeiten der ersten Steuerdaten, um das vierte Infrarotsignal zu bilden (302), Folgendes umfasst: Codieren der ersten Steuerdaten, Durchführen einer Impulsmodulation an den codierten ersten Steuerdaten, um ein zweites Aussendungssignal zu bilden, Durchführen einer Verstärkung und Infrarotlichtemissionsdiodenumwandlung an dem zweiten Aussendungssignal, um das vierte Infrarotsignal zu bilden.

12. Computerspeichermedium nach Anspruch 11, wobei es sich bei dem ersten Betriebsmodus um einen Entfernungsmessmodus handelt und der Schritt zur Erfassung der ersten Messdaten gemäß dem Aussendungszeitpunkt und dem Empfangszeitpunkt Folgendes umfasst:
Berechnen einer Zeitdifferenz Δt zwischen dem Aussendungszeitpunkt und dem Empfangszeitpunkt, und Erhalten von ersten Messdaten s gemäß der Zeitdifferenz Δt und einer Infrarotsignalübertragungsgeschwindigkeit v, wobei s = Δt*v/2.

13. Computerspeichermedium nach Anspruch 11 oder 12, wobei es sich bei dem ersten Betriebsmodus um eines Entfernungsmessmodus handelt und nach der Erfassung der ersten Messdaten gemäß dem Aussendungszeitpunkt und dem Empfangszeitpunkt das Verfahren weiterhin Folgendes umfasst:
erneutes Aussenden des ersten Infrarotsignals n Mal, Aufzeichnen der Zeitdifferenzen Δt₁, Δt₂, ..., Δtₙ zwischen dem Empfang zweier aufeinander folgender Reflexionssignale aus der Menge der Reflexionssignale der ersten Infrarotsignals, und Erhalten dritter Messdaten vₙ gemäß der Zeitdifferenzen und der Infrarotsignalübertragungsgeschwindigkeit v, wobei vₙ = (Δt₁ + Δt₂ + ... + Δtₙ)*v/2n, wobei es sich bei n um eine positive ganze Zahl handelt.

14. Computerspeichermedium nach Anspruch 11, wobei es sich bei dem zweiten Betriebsmodus um einen Temperaturmessmodus handelt und der Schritt zur Erfassung zweiter Messdaten gemäß dem ersten Attribut und den durch die Verarbeitung des dritten Infrarotsignals erhaltenen Daten Folgendes umfasst:
gemäß dem ersten Attribut Erfassen eines dem zu messenden Objekt entsprechenden Emissionsvermögens, und Korrigieren der durch die Verarbeitung des dritten Infrarotsignals erhaltenen Daten gemäß dem Emissionsvermögen, um zweite Messdaten zu erfassen.

15. Computerspeichermedium nach Anspruch 11, wobei es sich bei dem dritten Betriebsmodus um einen Fernsteuerungsmodus handelt und der Schritt zur Erfassung der ersten Messdaten gemäß der ersten Art und dem Steuersignal Folgendes umfasst:
gemäß der ersten Art Erfassen einer der ersten Art entsprechenden Codetabelle, und Erfassen, aus der Codetabelle, von ersten, dem Eingangssteuersignal entsprechenden Steuerdaten gemäß dem Eingangssteuersignal.

## Revendications

1. Procédé de traitement de signal infrarouge multifonctionnel, comprenant :
lorsqu'il a été déterminé par un terminal mobile qu'un mode de fonctionnement en cours est un premier mode de fonctionnement, le traitement, par le terminal mobile, de premières données prédéfinies afin de former un premier signal infrarouge, l'émission du premier signal infrarouge et le relevé de l'instant d'émission (101) ; lorsqu'il a été déterminé par le terminal mobile qu'un deuxième signal infrarouge reçu est un signal réfléchi du premier signal infrarouge, le relevé de l'instant de réception (102) ; l'acquisition de premières données de mesure conformément à l'instant d'émission et à l'instant de réception (103) ;
ou, lorsqu'il a été déterminé par le terminal mobile que le mode de fonctionnement en cours est un deuxième mode de fonctionnement et qu'un attribut d'un objet à mesurer est un premier attribut, la concentration d'énergie de rayonnement infrarouge cible afin de former un troisième signal infrarouge (201) ; le traitement du troisième signal infrarouge et l'acquisition de deuxièmes données de mesure conformément au premier attribut et à des données obtenues par traitement du troisième signal infrarouge (202), ladite concentration d'énergie de rayonnement infrarouge cible afin de former le troisième signal infrarouge (201) comprenant : le regroupement de l'énergie de rayonnement infrarouge cible dans un champ de visée, et la concentration de l'énergie de rayonnement infrarouge cible sur un détecteur photoélectrique afin de former le troisième signal infrarouge ;
ou, lorsqu'il a été déterminé par le terminal mobile que le mode de fonctionnement en cours est un troisième mode de fonctionnement et que le type d'un dispositif à commander est un premier type, la détection d'un signal de commande d'entrée et l'acquisition de premières données de commande conformément au premier type et au signal de commande d'entrée (301) ; et le traitement des premières données de commande afin de former un quatrième signal infrarouge, et l'émission du quatrième signal infrarouge afin de commander le dispositif à commander (302), ledit traitement des premières données de commande afin de former le quatrième signal infrarouge (302) comprenant : le codage des premières données de commande, la réalisation d'une modulation d'impulsions sur les premières données de commande codées afin de former un deuxième signal d'émission, la réalisation d'une amplification et d'une conversion de diode électroluminescente infrarouge sur le deuxième signal d'émission afin de former le quatrième signal infrarouge.

2. Procédé selon la revendication 1, dans lequel le premier mode de fonctionnement est un mode de télémétrie, et l'étape d'acquisition de premières données de mesure conformément à l'instant d'émission et à l'instant de réception comprend :
le calcul d'un différentiel de temps Δt entre l'instant d'émission et l'instant de réception, et l'obtention de premières données de mesure s conformément au différentiel de temps Δt et à une vitesse de transmission du signal infrarouge v, où s = Δt*v/2.

3. Procédé selon la revendication 1 ou 2, dans lequel le premier mode de fonctionnement est un mode de télémétrie, et suite à l'acquisition des premières données de mesure conformément à l'instant d'émission et à l'instant de réception, le procédé comprend en outre :
la réémission du premier signal infrarouge n fois, le relevé des différentiels de temps Δt₁, Δt₂, ..., Δtₙ entre les réceptions de deux signaux réfléchis successifs parmi les signaux réfléchis des premiers signaux infrarouges, et l'obtention de troisièmes données de mesure vₙ conformément aux différentiels de temps et à la vitesse de transmission du signal infrarouge v, où vₙ = (Δt₁ + Δt₂ + ... + Δtₙ)*v/2n, n étant un entier positif.

4. Procédé selon la revendication 1, dans lequel le deuxième mode de fonctionnement est un mode de thermométrie, et l'étape d'acquisition de deuxièmes données de mesure conformément au premier attribut et aux données obtenues par traitement du troisième signal infrarouge comprend :
l'acquisition, conformément au premier attribut, d'une émissivité correspondant à l'objet à mesurer, et la correction des données obtenues par traitement du troisième signal infrarouge conformément à l'émissivité, afin d'acquérir des deuxièmes données de mesure.

5. Procédé selon la revendication 1, dans lequel le troisième mode de fonctionnement est un mode de télécommande, et l'étape d'acquisition de premières données de commande conformément au premier type et au signal de commande d'entrée comprend :
l'acquisition d'une table de code correspondant au premier type, conformément au premier type, et l'acquisition, à partir de la table de code, de premières données de commande correspondant au signal de commande d'entrée, conformément au signal de commande d'entrée.

6. Terminal mobile, comprenant un module de traitement (41), un module d'émission (42) et un module de réception (43), dans lequel
le module de traitement (41) est conçu pour : envoyer, lorsqu'il a été déterminé qu'un mode de fonctionnement en cours est un premier mode de fonctionnement, des premières données prédéfinies auprès du module d'émission, et acquérir des premières données de mesure conformément à l'instant d'émission envoyé par le module d'émission et à l'instant de réception envoyé par le module de réception ;
ou, déclencher, lorsqu'il a été déterminé que le mode de fonctionnement en cours est un deuxième mode de fonctionnement, le module de réception (43), et acquérir, lorsqu'il a été déterminé qu'un attribut d'un objet à mesurer est un premier attribut, des deuxièmes données de mesure conformément au premier attribut et aux données obtenues par traitement du troisième signal infrarouge envoyé par le module de réception ;
ou, détecter, lorsqu'il a été déterminé que le mode de fonctionnement en cours est un troisième mode de fonctionnement et que le type d'un dispositif à commander est un premier type, un signal de commande d'entrée, acquérir des premières données de commande conformément au premier type et au signal de commande d'entrée, et envoyer les premières données de commande auprès du module d'émission (42) ;
le module d'émission (42) est conçu pour : recevoir, lorsque le mode de fonctionnement en cours est le premier mode de fonctionnement, les premières données prédéfinies envoyées par le module de traitement (41), traiter les premières données prédéfinies afin de former un premier signal infrarouge, émettre le premier signal infrarouge, relever l'instant d'émission, et envoyer l'instant d'émission au module de traitement ;
ou, recevoir, lorsque le mode de fonctionnement en cours est le troisième mode de fonctionnement, les premières données de commande envoyées par le module de traitement (41), coder les premières données de commande, réaliser une modulation d'impulsions sur les premières données de commande codées afin de former un deuxième signal d'émission, réaliser une amplification et une conversion de diode électroluminescente infrarouge sur le deuxième signal d'émission afin de former un quatrième signal infrarouge, et émettre le quatrième signal infrarouge afin de commander le dispositif à commander ; et
le module de réception (43) est conçu pour : recevoir, lorsque le mode de fonctionnement en cours est le premier mode de fonctionnement, un deuxième signal infrarouge, relever, lorsqu'il a été déterminé que le deuxième signal infrarouge reçu est un signal réfléchi du premier signal infrarouge, l'instant de réception, et envoyer l'instant de réception au module de traitement ;
ou, regrouper, lorsque le mode de fonctionnement en cours est le deuxième mode de fonctionnement, l'énergie de rayonnement infrarouge cible dans un champ de visée, et concentrer l'énergie de rayonnement infrarouge cible sur un détecteur photoélectrique afin de former un troisième signal infrarouge, traiter le troisième signal infrarouge, et envoyer les données obtenues par traitement du troisième signal infrarouge au module de traitement (41).

7. Terminal mobile selon la revendication 6, dans lequel, lorsque le premier mode de fonctionnement est un mode de télémétrie, le module de traitement (41) est conçu pour calculer un différentiel de temps Δt entre l'instant d'émission et l'instant de réception, et obtenir des premières données de mesure s conformément au différentiel de temps Δt et à une vitesse de transmission du signal infrarouge v, où s = Δt*v/2.

8. Terminal mobile selon la revendication 6 ou 7, dans lequel, lorsque le premier mode de fonctionnement est un mode de télémétrie, le module d'émission (42) est conçu en outre pour réémettre le premier signal infrarouge n fois, relever les différentiels de temps Δt₁, Δt₂, ..., Δtₙ entre les réceptions de deux signaux réfléchis successifs parmi les signaux réfléchis des premiers signaux infrarouges, et envoyer les différentiels de temps au module de traitement ; et
en conséquence, le module de traitement (41) est conçu en outre pour obtenir des troisièmes données de mesure vₙ conformément aux différentiels de temps et à la vitesse de transmission du signal infrarouge v, où vₙ = (Δt₁ + Δt₂ + ... + Δtₙ)*v/2n, n étant un entier positif.

9. Terminal mobile selon la revendication 6, dans lequel, lorsque le deuxième mode de fonctionnement est un mode de thermométrie, le module de traitement (41) est conçu pour acquérir, conformément au premier attribut, une émissivité correspondant à l'objet à mesurer, et corriger les données obtenues par traitement du troisième signal infrarouge conformément à l'émissivité, afin d'acquérir des deuxièmes données de mesure.

10. Terminal mobile selon la revendication 6, dans lequel, lorsque le troisième mode de fonctionnement est un mode de télécommande, le module de traitement (41) est conçu pour acquérir une table de code correspondant au premier type, conformément au premier type, et acquérir, à partir de la table de code, des premières données de commande correspondant au signal de commande d'entrée, conformément au signal de commande d'entrée.

11. Support d'enregistrement informatique sur lequel sont enregistrées des instructions exécutables par ordinateur et permettant exécuter, lorsqu'elles sont mises en œuvre, un procédé de traitement de signal infrarouge multifonctionnel comprenant :
lorsqu'il a été déterminé par un terminal mobile qu'un mode de fonctionnement en cours est un premier mode de fonctionnement, le traitement, par le terminal mobile, de premières données prédéfinies afin de former un premier signal infrarouge, l'émission du premier signal infrarouge et le relevé de l'instant d'émission (101) ; lorsqu'il a été déterminé par le terminal mobile qu'un deuxième signal infrarouge reçu est un signal réfléchi du premier signal infrarouge, le relevé de l'instant de réception (102) ; l'acquisition de premières données de mesure conformément à l'instant d'émission et à l'instant de réception (103) ;
ou, lorsqu'il a été déterminé par le terminal mobile que le mode de fonctionnement en cours est un deuxième mode de fonctionnement et qu'un attribut d'un objet à mesurer est un premier attribut, la concentration d'énergie de rayonnement infrarouge cible afin de former un troisième signal infrarouge (201) ; le traitement du troisième signal infrarouge, et l'acquisition de deuxièmes données de mesure conformément au premier attribut et aux données obtenues par traitement du troisième signal infrarouge (202), ladite concentration d'énergie de rayonnement infrarouge cible afin de former le troisième signal infrarouge (201) comprenant : le regroupement de l'énergie de rayonnement infrarouge cible dans un champ de visée, et la concentration de l'énergie de rayonnement infrarouge cible sur un détecteur photoélectrique afin de former le troisième signal infrarouge ;
ou, lorsqu'il a été déterminé par le terminal mobile que le mode de fonctionnement en cours est un troisième mode de fonctionnement et que le type d'un dispositif à commander est un premier type, la détection d'un signal de commande d'entrée, et l'acquisition de premières données de commande conformément au premier type et au signal de commande d'entrée (301) ; et le traitement des premières données de commande afin de former un quatrième signal infrarouge, et l'émission du quatrième signal infrarouge afin de commander le dispositif à commander (302), ledit traitement des premières données de commande afin de former le quatrième signal infrarouge (302) comprenant : le codage des premières données de commande, la réalisation d'une modulation d'impulsions sur les premières données de commande codées afin de former un deuxième signal d'émission, la réalisation d'une amplification et d'une conversion de diode électroluminescente infrarouge sur le deuxième signal d'émission afin de former le quatrième signal infrarouge.

12. Support d'enregistrement informatique selon la revendication 11, dans lequel le premier mode de fonctionnement est un mode de télémétrie, et l'étape d'acquisition de premières données de mesure conformément à l'instant d'émission et à l'instant de réception comprend :
le calcul d'un différentiel de temps Δt entre l'instant d'émission et l'instant de réception, et l'obtention de premières données de mesure s conformément au différentiel de temps Δt et à une vitesse de transmission du signal infrarouge v, où s = Δt*v/2.

13. Support d'enregistrement informatique selon la revendication 11 ou 12, dans lequel le premier mode de fonctionnement est un mode de télémétrie, et suite à l'acquisition des premières données de mesure conformément à l'instant d'émission et à l'instant de réception, le procédé comprend en outre :
la réémission du premier signal infrarouge n fois, le relevé des différentiels de temps Δt₁, Δt₂, ..., Δtₙ entre les réceptions de deux signaux réfléchis successifs parmi les signaux réfléchis des premiers signaux infrarouges, et l'obtention de troisièmes données de mesure vₙ conformément aux différentiels de temps et à la vitesse de transmission du signal infrarouge v, où vₙ = (Δt₁ + Δt₂ + ... + Δtₙ)*v/2n, n étant un entier positif.

14. Support d'enregistrement informatique selon la revendication 11, dans lequel le deuxième mode de fonctionnement est un mode de thermométrie, et l'étape d'acquisition de deuxièmes données de mesure conformément au premier attribut et aux données obtenues par traitement du troisième signal infrarouge comprend :
l'acquisition, conformément au premier attribut, d'une émissivité correspondant à l'objet à mesurer, et la correction des données obtenues par traitement du troisième signal infrarouge conformément à l'émissivité, afin d'acquérir des deuxièmes données de mesure.

15. Support d'enregistrement informatique selon la revendication 11, dans lequel le troisième mode de fonctionnement est un mode de télécommande, et l'étape d'acquisition de premières données de commande conformément au premier type et au signal de commande comprend :
l'acquisition d'une table de code correspondant au premier type, conformément au premier type, et l'acquisition, à partir de la table de code, de premières données de commande correspondant au signal de commande d'entrée, conformément au signal de commande d'entrée.
